# EUROPÄISCHE PATENTSCHRIFT

(11) **EP 3 380 770 B1**
(45) Veröffentlichungstag und Bekanntmachung des Hinweises auf die Patenterteilung: **22.04.2020**
(21) Anmeldenummer: 16808937.3
(22) Anmeldetag: 24.11.2016
(51) Int. Cl.: F16L 33/025, F16L 33/02, F16L 35/00

(54) **SCHUTZVORRICHTUNG FÜR EINE SCHLAUCHKLEMME**
PROTECTIVE DEVICE FOR A HOSE CLIP
DISPOSITIF DE PROTECTION POUR UN COLLIER DE SERRAGE

(30) Priorität: 26.11.2015 DE 102015120561
(43) Veröffentlichungstag der Anmeldung: 03.10.2018
(73) Patentinhaber: Sartorius Stedim Biotech GmbH, 37079 Göttingen (DE)
(72) Erfinder: REQUATE, Wilhelm, 37308 Heilbad Heiligenstadt (DE); DELL, Andre, 37434 Gieboldehausen (DE); LOEWE, Thomas, 37077 Göttingen (DE); WORTMEYER, Johannes, 37085 Göttingen (DE)
(74) Vertreter: Schneider, Peter Christian
(86) Internationale Anmeldenummer: PCT/EP2016/078649
(87) Internationale Veröffentlichungsnummer: WO 2017/089450

(56) Entgegenhaltungen:
- EP-A1- 2 341 273
- EP-A2- 0 603 846
- FR-A1- 3 007 813

## Beschreibung

### Gebiet der Erfindung

Die Erfindung betrifft eine Schutzvorrichtung für eine Schlauchklemme, über die ein Schlauchende mit einem Schlauchanschluss verbindbar ist, mit einem aus einem Kunststoff ausgebildeten Schutzkörper, wobei der Schutzkörper im montierten Zustand die Schlauchklemme an ihrem Umfang umschließt und mindestens in deren Spannbereich durch eine Ausformung in radialer Richtung aufnimmt und die Schlauchklemme in ihrer sich in Längsrichtung des Schlauchanschlusses erstreckenden Breite überdeckt, wobei der Schutzkörper zwei Ringsegmente aufweist, die an ihren freien einander zugewandten Enden miteinander durch eine Verrastung verbindbar und an ihren den freien Enden abgewandten Enden beweglich miteinander verbunden sind.

### Stand der Technik

Aus der AU 199 856 334 B2 ist eine Schutzvorrichtung für eine Schlauchklemme zum Verbinden eines Schlauchendes mit einem Schlauchanschluss bekannt. Dabei weist die Schutzvorrichtung einen aus einem Kunststoff ausgebildeten Schutzkörper auf, der die Schlauchklemme an ihrem Umfang umschließt und eine Ausformung in radialer Richtung aufweist, die den Spannbereich der Schlauchklemme aufnimmt und ein Verschieben der Schutzvorrichtung des montierten Schutzkörpers in Längsrichtung des Schlauchanschlusses verhindert.

Nachteilig dabei ist, dass zur einfachen Montage der umlaufende Bereich des Schutzkörpers eine relative hohe Elastizität aufweisen muss, während im Bereich der Ausformung der Schutzkörper eine relativ hohe Steifigkeit zur Erfüllung seiner Schutzfunktion aufweisen muss. Deswegen wird dort vorgeschlagen, den Schutzkörper aus zwei unterschiedlichen Kunststoffen herzustellen, was zu unerwünscht hohen Herstellungskosten führt.
Auch ist aus der AU 199 856 334 B2 ein weiterer Schutzkörper aus einem Kunststoff bekannt, der im Spannbereich der Schlauchklemme eine kappenförmige Aussparung aufweist, die in zwei seitlichen streifenförmigen Enden übergeht, die die Schlauchklemme in einem Teilbereich ihres Umfanges klemmend umfassen.

Nachteilig bei dieser zweiten Lösung ist, dass der Schutzkörper in seinem dem Spannbereich abgewandten Bereich für Montagezwecke offen sein muss und die Schutzklemme an ihrem Umfang nicht umschließen kann.

Schließlich ist aus der AU 199 856 334 B2 ein Schutzkörper aus einem halbsteifen Kunststoff bekannt, der eine kappen- oder kuppelförmige Ausformung in radialer Richtung zur Aufnahme des Spannbereiches der Schlauchklemme aufweist. Die kuppelförmige Ausformung ist an einem Ende eines streifenförmigen Bandes angeordnet. Dabei weist das Band an seinem der Ausformung abgewandten Ende eine Öffnung auf, mit der das Bandende über den Spannbereich stülpbar und um den Umfang der Schutzklemme windbar ist, wobei das die Ausformung enthaltende Ende ebenfalls über den Spannbereich gestülpt wird.

Nachteilig dabei ist, dass das Band des Schutzkörpers eine relative Flexibilität benötigt, damit es um die Schlauchklemme gelegt oder gewunden werden kann. Um im Ausformungsbereich die notwendige Steifigkeit zu erhalten, muss dort zudem eine Verstärkungsrippe angeordnet werden.

Weiterhin sind aus der US 2,614,304 A und aus der DE 600 19 108 T2 Schlauchklemmen bekannt, deren Spannbereich in Form eines auswärts gerichteten, plastisch verformbaren Ohres (Schlaufe) mit nach außen verlaufenden Schenkelabschnitten, die über einen im Wesentlichen im Umfangsrichtung quer zur Längsrichtung des Schlauchanschlusses verlaufenden Brückenabschnitt miteinander verbunden sind und zum Spannen der Schlauchklemme plastisch zu dem Ohr verformt werden. Solche Schlauchklemmen, die sich insbesondere für Schlauchverbindungen mit hohen Drücken grundsätzlich bewährt haben, haben jedoch den Nachteil, dass bei steril verpackten Einwegprodukten mit Schlauchanschlüssen die Sterilverpackungen durch die Schlauchklemmen beschädigt werden können.

Aus der EP 0603 846 A2 ist eine Knickschutzvorrichtung aus Kunststoff für Kabelstecker mit einem aus einem Kunststoff ausgebildeten Schutzkörper bekannt. Dabei umschließt der Schutzkörper im montierten Zustand den Kabelstecker an seinem Umfang und nimmt ihn mindestens in seinem Spannbereich durch eine Ausformung in radialer Richtung auf und überdeckt den Kabelstecker in ihrer sich in Längsrichtung des Kabelsteckers erstreckenden Breite, wobei der Schutzkörper zwei Ringsegmente aufweist, die an ihren freien einander zugewandten Enden miteinander durch eine Verrastung verbindbar und an ihren den freien Enden abgewandten Enden über ein Filmscharnier beweglich miteinander verbunden sind

Nachteilig bei dieser bekannten Vorrichtung ist, dass der aus zwei Halbschalen ausgebildete Schutzkörper relativ genau auf den zu schützenden Kabelstecker abgestimmt sein muss und entsprechend genau positioniert werden muss.

Aus der EP 0 603 846 A2 ist eine Rohrklemme zum Verbinden eines Rohres mit einem in ein Ende des Rohres einsteckbaren Anschlussstück bekannt. Die Rohrklemme weist einen Klemmring auf, der entlang seines Umfanges einen ringförmigen Abschnitt und ein sich radial nach außen erstreckendes Ohr besitzt, das von einem Werkzeug zusammenpressbar ist. Der Klemmring ist in einem Klemmringhalter aus Kunststoff gelagert. Eine Ohrspaltlasche ist am Klemmringhalter angebracht und insbesondere angeformt. Dabei umschließt der Klemmringhalter im montierten Zustand den Klemmring an seinem Umfang und nimmt ihn mindestens in seinem Stegbereich durch eine Ausformung in radialer Richtung auf und überdeckt die Ohrspaltlasche in ihrer sich in Längsrichtung erstreckenden Breite, wobei der Klemmringhalter zwei Halteteile aufweist, die an ihren freien einander zugewandten Enden durch eine Verrastung starr miteinander verbindbar sind.

Nachteilig bei dieser bekannten Vorrichtung ist, dass der aus zwei Halteteilen ausgebildete Klemmringhalter relativ genau auf den Klemmring abgestimmt sein muss und entsprechend genau positioniert werden muss.

Aus der EP 2 341 273 A1 ist Schutzvorrichtung für eine Schlauchklemme, über die ein Schlauchende mit einem Schlauchanschluss verbindbar ist, bekannt. Die Schutzvorrichtung weist einen aus einem Kunststoff ausgebildeten Schutzkörper auf, wobei der Schutzkörper im montierten Zustand die Schlauchklemme an ihrem Umfang umschließt und mindestens in deren Spannbereich durch eine Ausformung in radialer Richtung aufnimmt und die Schlauchklemme in ihrer sich in Längsrichtung des Schlauchanschlusses erstreckenden Breite überdeckt. Dabei weist der Schutzkörper mindestens zwei Ringsegmente auf, die an ihren freien einander zugewandten Enden miteinander durch eine Verrastung verbindbar und an ihren den freien Enden abgewandten Enden beweglich miteinander verbunden sind

Nachteilig bei dieser bekannten Vorrichtung, die sich grundsätzlich bewährt hat, ist, dass der aus zwei Halbschalen ausgebildete Schutzkörper relativ aufwendig und voluminös ausgebildet ist und relativ genau positioniert werden muss.

### Aufgabenstellung

Es ist die Aufgabe der vorliegenden Erfindung, die bekannten Schutzvorrichtungen so zu verbessern, dass sie aus einem Kunststoff mit ausreichender Festigkeit zur Verbesserung ihrer Schutzfunktion herstellbar sind. Gleichzeitig sollen die Schutzvorrichtungen einfach und sicher montierbar sein.

### Darlegung der Erfindung

Diese Aufgabe wird in Verbindung mit den Merkmalen des Oberbegriffs von Anspruch 1 dadurch gelöst, dass die Ringsegmente an ihren den freien Enden abgewandten gelenkseitigen Enden flexibel an ein benachbartes drittes Ringsegment angelenkt sind und dass das benachbarte dritte Ringsegment ein die zwei Ringsegmente miteinander verbindendes Zwischensegment ist.

Durch die gelenkartige Verbindung der Ringsegmente sind diese quer zur Längsachse des Schlauchanschlusses weg- oder einklappbar und entsprechend an ihren freien Enden lösbar oder unlösbar miteinander verbindbar. Durch die gelenkartige Verbindung können die Ringsegmente eine relativ hohe Steifigkeit aufweisen, die mit der Schutzfunktion korreliert. Durch entsprechende Ausbildung des Schutzkörpers mit runden Kanten ohne scharfe Ecken wird das Risiko einer evtl. Beschädigung einer Sterilverpackung erheblich vermindert. Durch die Verrastung ist eine einfache und schnelle Montage des Schutzkörpers möglich. Gleichzeitig kann die Schutzvorrichtung mit dem Schutzkörper einfach demontiert und ggf. wieder verwendet werden. Die Ringsegmente sind an ihren den freien Enden abgewandten gelenkseitigen Enden flexibel an ein benachbartes drittes Ringsegment angelenkt. Das benachbarte Ringsegment ist dabei ein die zwei Ringsegmente miteinander verbindendes Zwischensegment. Insofern ist der Schutzkörper aus drei Ringsegmenten ausgebildet.

Durch die Anordnung eines dritten Ringsegmentes wird überraschender Weise die Montage des Schutzkörpers vereinfacht und die Positionierung gerade wegen der zusätzlichen Anlenkung erleichtert.

Nach einer weiteren bevorzugten Ausführungsform der Erfindung erfolgt die Anlenkung über eine flexible Dünnstelle. Durch die Ausbildung als Dünnstelle ergibt sich für die Anlenkung eine höhere Flexibilität im Verhältnis zu den Ringsegmenten.

Gemäß einer bevorzugten Ausführungsform der Erfindung weist der Schutzkörper mindestens auf seiner dem Schlauchanschluss abgewandten Seite einen als Übergriff zum Aufnehmen eines Teiles des Schlauches ausgebildeten Knickschutz auf. Durch den Knickschutz wird ein gerade im Übergangsbereich zwischen Schlauchanschluss und Schlauchende mögliches Abknicken des Schlauches zuverlässig verhindert. Ein Abknicken des Schlauches gilt es wegen einer damit verbundenen unerwünschten Durchflussänderung zu verhindern.

Nach einer weiteren bevorzugten Ausführungsform der Erfindung ist der Knickschutz als ein sich vom Schutzkörper weggerichtet verjüngender Konus ausgebildet. Durch die konische Ausbildung des Knickschutzes nimmt die Flexibilität entsprechend der sich verringernden Wandstärke zu, was zugleich die Gefahr des Abknickens des Schlauches am Ende des Knickschutzes verringert.

Nach einer weiteren bevorzugten Ausführungsform der Erfindung ist der Knickschutz als eine vom Schutzkörper weg gerichtete Wendel ausgebildet. Die Wendel verhindert ebenfalls ein unerwünschtes Abknicken, ermöglicht aber eine gewisse Krümmung des Schlauches.

Gemäß einer weiteren bevorzugten Ausführungsform der Erfindung ist der Knickschutz als ein vom Schutzkörper weg gerichteter Zylinder mit radial nach innen gerichteten ringförmigen Rippen ausgebildet. Da die Rippen nach innen gerichtet sind, wird zudem ein Eindringen von Schmutz von außen her verhindert. Durch die ringförmigen von den Rippen seitlich begrenzten Zwischenräume sind zwischen den einzelnen Rippen jeweils Dünnstellen angeordnet, die einerseits die Flexibilität des Knickschutzes erhöhen und andererseits durch die Rippen ein zu starkes Abknicken durch Aneinanderstoßen der freien Enden der Rippen verhindern.

Entsprechend ist es auch möglich, den Knickschutz als einen vom Schutzkörper weg gerichteter Zylinder mit radial nach außen gerichteten ringförmigen Rippen auszubilden. Weitere Merkmale und Vorteile der Erfindung ergeben sich aus der nachfolgenden speziellen Beschreibung und den Zeichnungen.

### Kurzbeschreibung der Zeichnungen

Es zeigen:

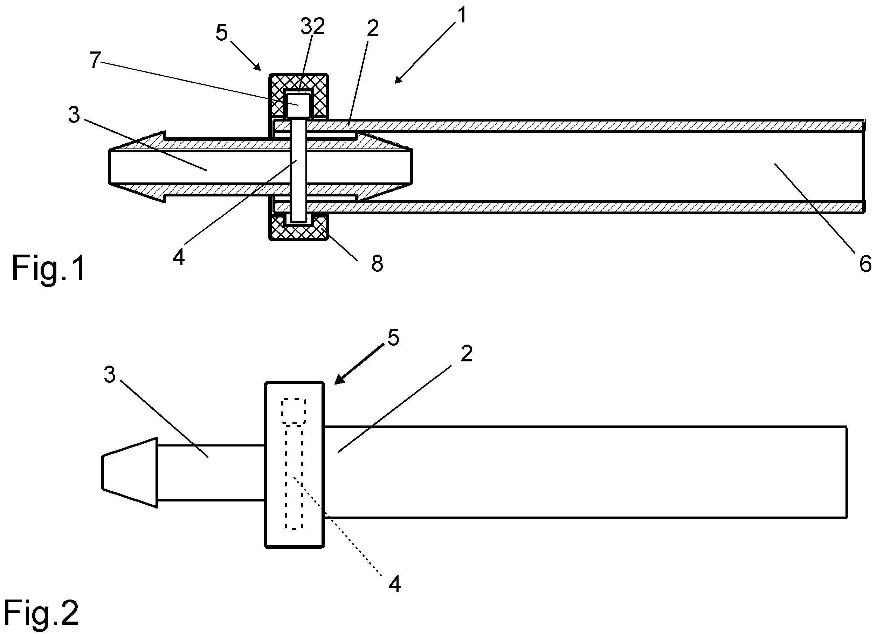

- Figur 1:: eine Seitenansicht im Schnitt einer Schlauchverbindung mit Schlauchklemme (ungeschnitten) und Schutzvorrichtung,
- Figur 2:: eine Seitenansicht der Schlauchverbindung von Figur 1 mit Schutzvorrichtung und gestrichelt angedeuteter Schlauchklemme,

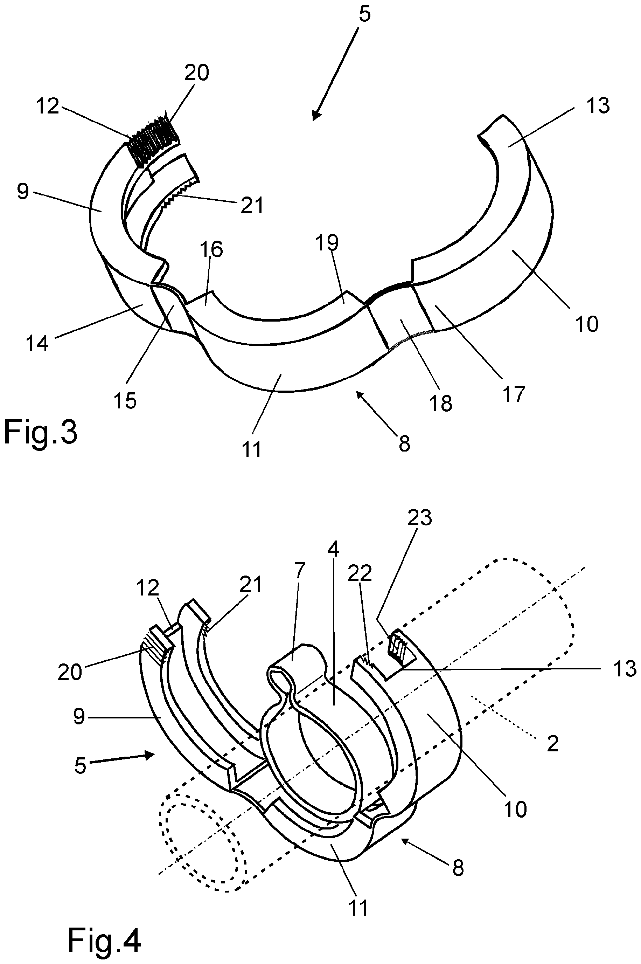

- Figur 3:: eine räumliche Darstellung der auseinandergeklappten Schutzvorrichtung von Figur 1,
- Figur 4:: eine räumliche Darstellung der Schutzvorrichtung von Figur 1 in aufgeklapptem Zustand mit dazwischen angeordneter Schlauchklemme und gestrichelt angedeutetem Schlauchende,
- Figur 5:: eine Seitenansicht im Schnitt einer Schlauchverbindung mit Schlauchklemme (ungeschnitten) und Schutzvorrichtung mit Knickschutz und Konus,
- Figur 6:: eine Seitenansicht im Schnitt einer Schlauchverbindung mit Schlauchklemme (ungeschnitten) und Schutzvorrichtung mit Wendel als Knickschutz (ungeschnitten),
- Figur 7:: eine Seitenansicht im Schnitt einer Schlauchverbindung mit Schlauchklemme (ungeschnitten) und Schutzvorrichtung mit Knickschutz als Zylinder mit radial nach innen gerichteten ringförmigen Rippen,
- Figur 8:: eine Seitenansicht im Schnitt einer Schlauchverbindung mit Schlauchklemme (ungeschnitten) mit Schutzkörper mit Knickschutz als Zylinder mit radial nach außen gerichteten Rippen,
- Figur 9:: eine Seitenansicht einer Schlauchverbindung mit Schlauchanschluss, Schlauchende und Schlauchklemme,
- Figur 10:: eine Seitenansicht der Schlauchverbindung von Figur 9 mit montierter Schutzvorrichtung,
- Figur 11:: eine räumliche Darstellung der Schutzvorrichtung von Figur 10 mit aufgeklapptem Schutzkörper,
- Figur 12:: eine weitere räumliche Darstellung der Schutzvorrichtung von Figur 10 mit aufgeklapptem Schutzkörper,
- Figur 13:: eine Seitenansicht des Schutzkörpers von Figur 12 aus Richtung XIII und
- Figur 14:: eine Draufsicht auf die Schutzvorrichtung von Figur 13 aus Richtung XIV.

### Beschreibung bevorzugter Ausführungsformen

Eine Schlauchverbindung 1 besteht im Wesentlichen aus einem Schlauchende 2, einem Schlauchanschluss 3, einer Schlauchklemme 4 und einer Schutzvorrichtung 5.

Zur Herstellung der Schlauchverbindung wird das Schlauchende 2 eines Schlauches 6 auf den Schlauchanschluss 3 aufgesteckt und in bekannter Weise über die Schlauchklemme 4 dichtend verbunden.

Die Schlauchklemme 4 ist als dem Fachmann bekannte Einohrklemme, wie sie beispielsweise aus der US 2,614,304 A und aus der DE 600 19 108 T2 bekannt ist, ausgebildet. Zur Montage wird die Schlauchklemme 4 über ihre Spannvorrichtung 7, beispielsweise ein zu einer Schlaufe oder "Ohr" plastisch verformbares Brückenteil, gespannt. Grundsätzlich können auch durch Verschrauben spannbare Schlauchklemmen verwendet werden.

Die Schutzvorrichtung 5 besteht im Wesentlichen aus einem aus Kunststoff ausgebildeten Schutzkörper 8, der im montierten Zustand eine Schlauchklemme (4) an ihrem Umfang umschließt und mindestens in deren Spannbereich durch eine Ausformung (32) in radialer Richtung aufnimmt und die Schlauchklemme (4) in ihrer sich in Längsrichtung des Schlauchanschlusses (3) erstreckenden Breite überdeckt. In den Ausführungsbeispielen besteht der Schutzkörper 8 aus einem ersten Ringsegment 9 und einem zweiten Ringsegment 10, die über ein benachbartes drittes Ringsegment 11 miteinander verbunden sind. Das erste Ringsegment 9 weist ein freies Ende 12 und das zweite Ringsegment 10 weist ein freies Ende 13 auf. An seinem dem freien Ende 12 abgewandten Ende 14 ist das erste Ringsegment 9 über eine flexible Dünnstelle 15 mit einem benachbarten Ende 16 verbunden. Das zweite Ringsegment 10 ist an seinem dem freien Ende 13 abgewandten Ende 17 über eine flexible Dünnstelle 18 mit einem benachbarten Ende 19 des dritten Ringsegmentes 11 verbunden.

An seinem freien Ende 12 weist das erste Ringsegment 9 erste außenliegende Rastelemente 20, 21 auf. Entsprechend weist das zweite Ringsegment 10 an seinem freien Ende 13 korrespondierende zweite innenliegende Rastelemente 22, 23 auf. Die ersten Rastelemente 20, 21 bilden zusammen mit den korrespondierenden zweiten Rastelementen 22, 23 eine Verrastung 24.

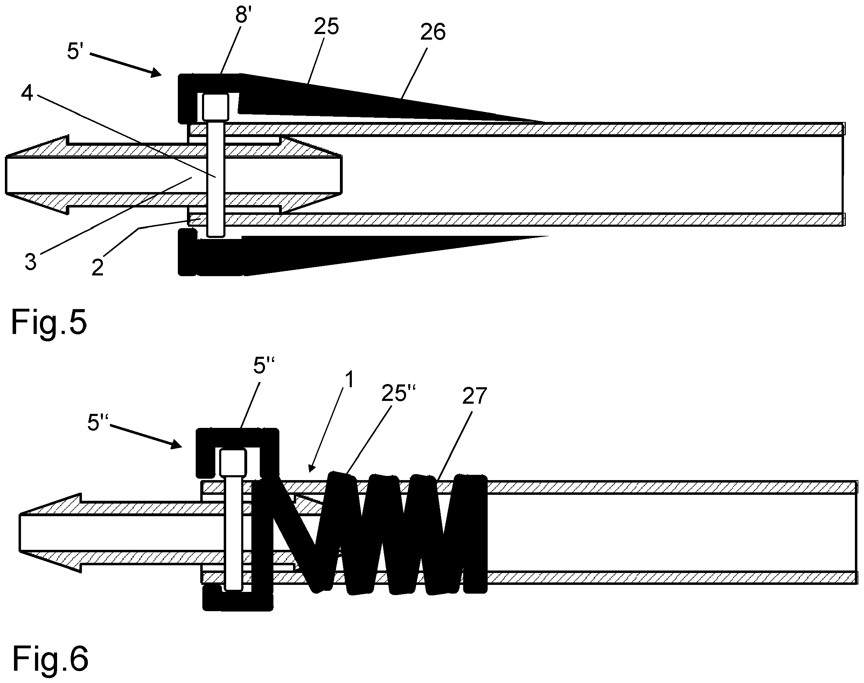

Entsprechend dem Ausführungsbeispiel von Figur 5 weist die Schutzvorrichtung 5' einen Schutzkörper 8' auf, der auf seiner dem Schlauchanschluss 3 abgewandten Seite einen als Übergriff zum Aufnehmen eines Teiles des Schlauches 6 ausgebildeten Knickschutz 25 aufweist. Der Knickschutz 25 ist dabei als ein sich vom Schutzkörper weggerichtet verjüngender Konus 26 ausgebildet.

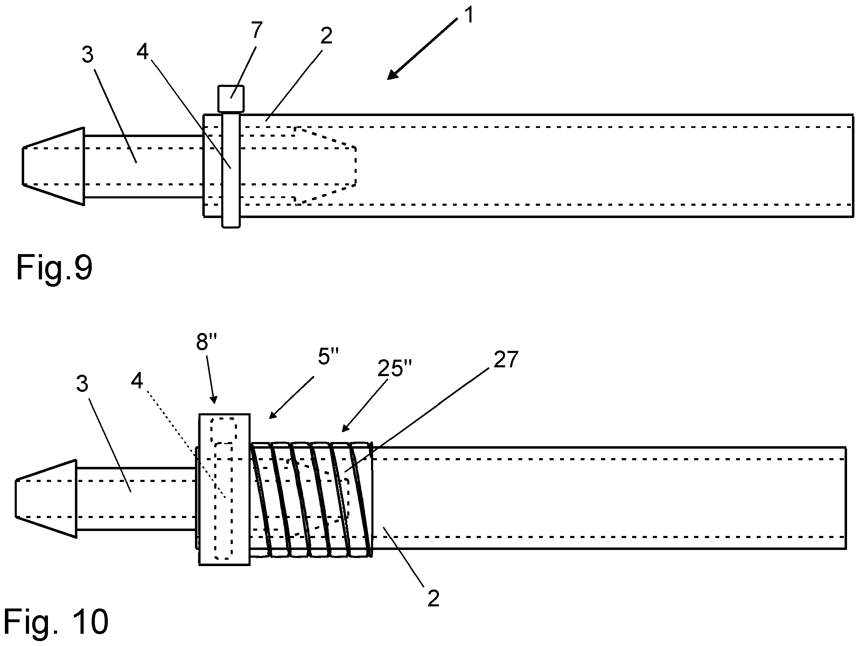

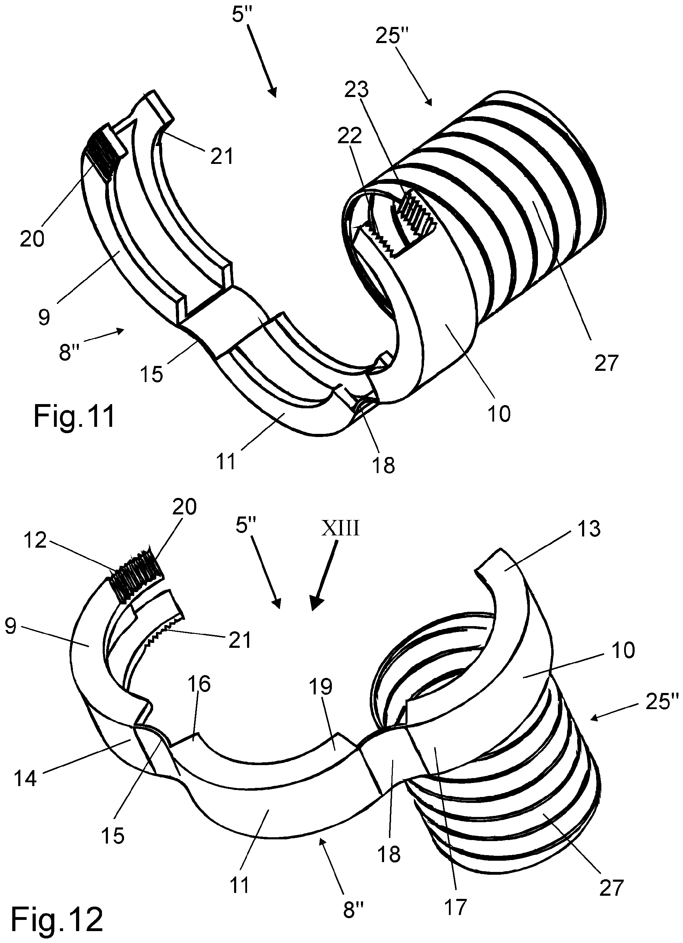

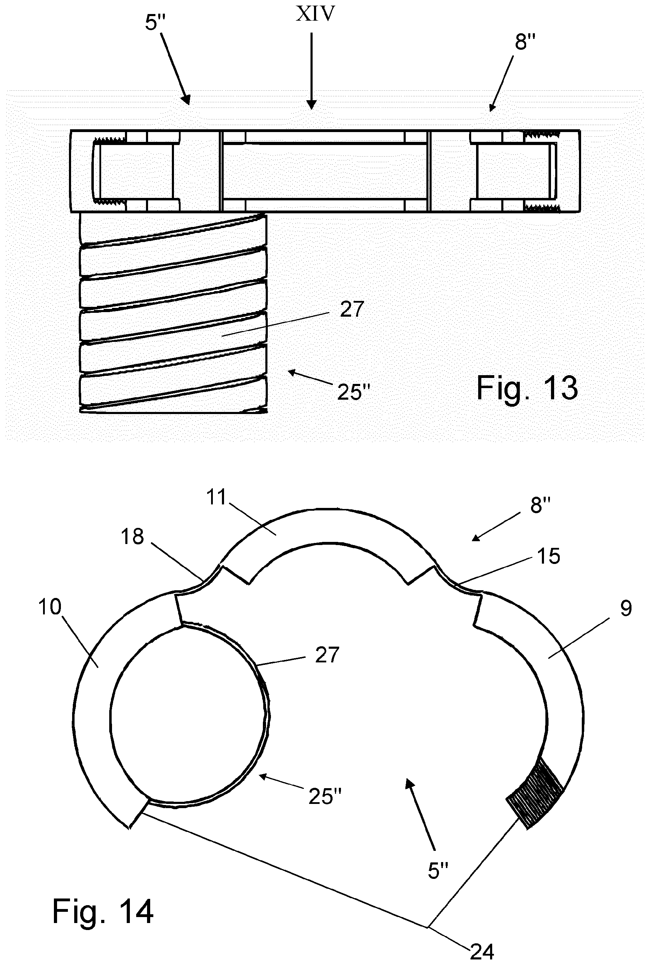

Entsprechend den Ausführungsbeispielen der Figuren 6, 10, 11, 12, 13, 14 weist die Schutzvorrichtung 5" einen Schutzkörper 8" mit einem Knickschutz 25" auf, der als eine vom Schutzkörper 8" weggerichtete Wendel 27 ausgebildet ist.

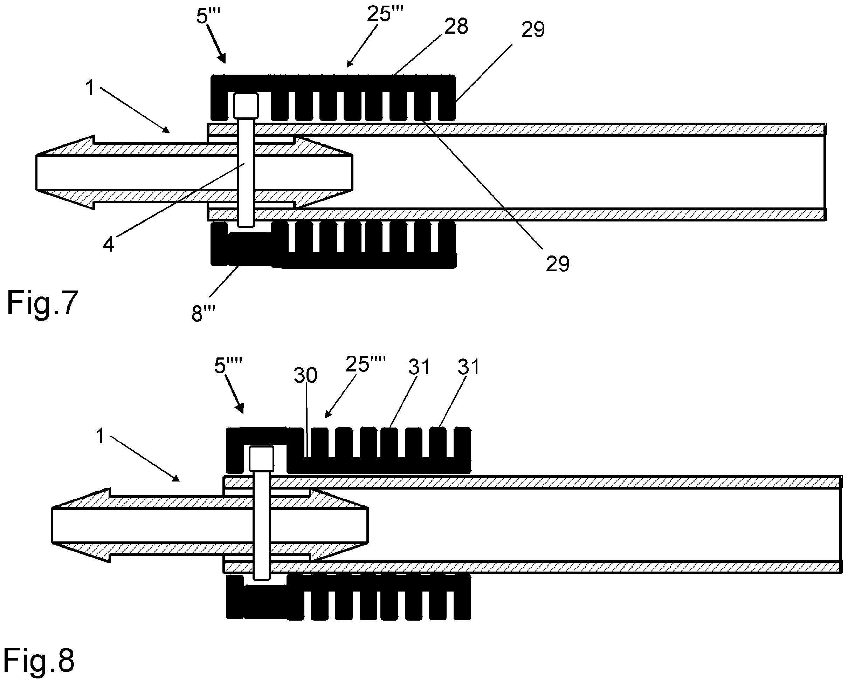

Entsprechend dem Ausführungsbeispiel von Figur 7 weist die Schutzvorrichtung 5'" einen Schutzkörper 8'" auf, dessen Knickschutz 25'" als ein vom Schutzkörper 8'" weg gerichteter Zylinder 28 mit radial nach innen gerichteten ringförmigen Rippen 29 ausgebildet ist.

Entsprechend dem Ausführungsbeispiel von Figur 8 weist die Schutzvorrichtung 5"" einen Knickschutz 25"" mit einem vom Schutzkörper 8"" weg gerichteten Zylinder 30 mit radial nach außen gerichteten ringförmigen Rippen 31 auf.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

Insbesondere kann der Knickschutz 25 jeweils mit einem der Ringsegmente 9, 10, 11 verbunden sein. Weiterhin ist es auch möglich den Knickschutz 25, 25"', 25"" aufzuteilen und mit den Ringsegmenten 9, 10, 11 zu verbinden.

### Bezugszeichenliste

- 1: Schlauchverbindung
- 2: Schlauchende von 6
- 3: Schlauchanschluss
- 4: Schlauchklemme
- 5, 5', 5", 5"', 5"": Schutzvorrichtung
- 6: Schlauch
- 7: Spannvorrichtung
- 8, 8', 8", 8"', 8"": Schutzkörper
- 9: erstes Ringsegment von 8
- 10: zweites Ringsegment von 8
- 11: drittes Ringsegment von 8
- 12: freies Ende von 9
- 13: freies Ende von 10
- 14: Ende von 9
- 15: flexilble Dünnstelle von 8
- 16: Ende von 11
- 17: Ende von 10
- 18: flexible Dünnstelle von 8
- 19: Ende von 11
- 20: erstes Rastelement von 12
- 21: erstes Rastelement von 12
- 22: zweites Rastelement von 13
- 23: zweites Rastelement von 13
- 24: Verrastung
- 25, 25", 25"', 25"": Knickschutz
- 26: Konus von 25
- 27: Wendel von 25"
- 28: Zylinder von 25"'
- 29: Rippe von 28
- 30: Zylinder von 25""
- 31: Rippe von 30
- 32: Ausformung von 8

## Patentansprüche

1. Schutzvorrichtung (5, 5", 5", 5"', 5"") für eine Schlauchklemme (4), über die ein Schlauchende (2) mit einem Schlauchanschluss (3) verbindbar ist, mit einem aus einem Kunststoff ausgebildeten Schutzkörper (8, 8', 8", 8"', 8"'), wobei der Schutzkörper (8, 8', 8", 8"', 8"') im montierten Zustand die Schlauchklemme (4) an ihrem Umfang umschließt und mindestens in deren Spannbereich durch eine Ausformung (32) in radialer Richtung aufnimmt und die Schlauchklemme (4) in ihrer sich in Längsrichtung des Schlauchanschlusses (3) erstreckenden Breite bei entsprechender Breite der Schlauchklemme (4) überdeckt,
wobei der Schutzkörper (8, 8', 8", 8"', 8"") zwei Ringsegmente (9, 10) aufweist, die an ihren freien einander zugewandten Enden (12, 13) miteinander durch eine Verrastung (24) verbindbar und an ihren den freien Enden (12, 13) abgewandten Enden (14, 17) beweglich miteinander verbunden sind
**dadurch gekennzeichnet,**
**dass** die Ringsegmente (9, 10) an ihren den freien Enden (12, 13) abgewandten gelenkseitigen Enden (14, 17) flexibel an ein benachbartes drittes Ringsegment (11) angelenkt sind und
**dass** das benachbarte dritte Ringsegment (11) ein die zwei Ringsegmente (9, 10) miteinander verbindendes Zwischensegment ist.

2. Schutzvorrichtung nach Anspruch 1,
**dadurch gekennzeichnet,**
**dass** das erste Ringsegment (9) an seinem freien Ende (12) erste außenliegende Rastelemente (20, 21) aufweist,
**dass** entsprechend das zweite Ringsegment (10) an seinem freien Ende (13) korrespondierende zweite innenliegende Rastelemente (22, 23) aufweist, und dass die ersten Rastelemente (20, 21) zusammen mit den korrespondierenden zweiten Rastelementen (22, 23) die Verrastung (24) bilden.

3. Schutzvorrichtung nach Anspruch 1 oder 2,
**dadurch gekennzeichnet,**
**dass** die flexible Anlenkung über eine flexible Dünnstelle (15, 18) erfolgt.

4. Schutzvorrichtung nach einem der Ansprüche 1 bis 3,
**dadurch gekennzeichnet,**
**dass** der Schutzkörper (8', 8", 8'", 8"") mindestens auf seiner dem Schlauchanschluss (3) abgewandten Seite einen als Übergriff zum Aufnehmen eines Teiles des Schlauches (6) ausgebildeten Knickschutz (25, 25", 25"', 25"") aufweist.

5. Schutzvorrichtung nach Anspruch 4,
**dadurch gekennzeichnet,**
**dass** der Knickschutz (25) als ein sich vom Schutzkörper (8') weg gerichteter verjüngender Konus (26) ausgebildet ist.

6. Schutzvorrichtung nach Anspruch 4,
**dadurch gekennzeichnet,**
**dass** der Knickschutz (25") als eine vom Schutzkörper (8") weg gerichtete Wendel (27) ausgebildet ist.

7. Schutzvorrichtung nach Anspruch 4,
**dadurch gekennzeichnet,**
**dass** der Knickschutz (25"') als ein vom Schutzkörper (8'") weg gerichteter Zylinder (28) mit radial nach innen gerichteten ringförmigen Rippen (29) ausgebildet ist.

8. Schutzvorrichtung nach Anspruch 4,
**dadurch gekennzeichnet,**
**dass** der Knickschutz (25"") als ein vom Schutzkörper (8"") weg gerichteter Zylinder (30) mit radial nach außen gerichteten ringförmigen Rippen (31) ausgebildet ist.

## Claims

1. A protective device (5, 5', 5", 5"', 5"") for a hose clip (4), via which a hose end (2) can be connected to a hose connection (3), comprising a protective body (8, 8', 8", 8"', 8"") made of a plastic, wherein in the assembled state, the protective body (8, 8', 8", 8"', 8"") surrounds the hose clip (4) around the circumference thereof and accommodates same at least in its clamping region via a radially oriented moulding (32), and covers the hose clip (4) over the width thereof extending in the longitudinal direction of the hose connection (3),
the protective body (8, 8', 8", 8"', 8"") having two ring segments (9, 10) that can be connected to one another via a latching mechanism (24) at their free ends (12, 13) that are facing one another, and the segments (9, 10) are moveably connected to one another at their ends (14, 17) that are facing away from the free ends (12, 13),
**characterized in that**
the ring segments (9, 10) have articulated ends (14, 17) facing away from the free ends (12, 13), the articular ends (14, 17) of the ring segments (9, 10) being linked flexibly to an adjacent third ring segment (11) and
the adjacent third ring segment (11) being an intermediate segment that connects the two ring segments (9, 10) to one another.

2. The protective device according to Claim 1,
**characterized in that**
the first ring segment (9) has first externally located latching elements (20, 21) at its free end (12),
similarly, the second ring segment (10) has corresponding second internally located latching elements (22, 23) at its free end (13),
and the first latching elements (20, 21) together with the corresponding second latching elements (22, 23) form the catch mechanism (24).

3. The protective device according to Claim 1 or 2,
**characterized in that**
the flexible articulation is provided via a flexible thin section (15, 18).

4. The protective device according to any of Claims 1 to 3,
**characterized in that**
the protective body (8', 8", 8"', 8"") has, at least on the side thereof that is facing away from the hose connection (3), a kink protection (25, 25", 25"', 25"") formed as an overlapping element to accommodate a portion of the hose (6).

5. The protective device according to Claim 4,
**characterized in that**
the kink protection (25) is formed as a cone (26) tapered in the direction away from the protective body (8').

6. The protective device according to Claim 4,
**characterized in that**
the kink protection (25") is formed as a coil (27) directed away from the protective body (8").

7. The protective device according to Claim 4,
**characterized in that**
the kink protection (25"') is formed as a cylinder (28) that is directed away from the protective body (8'") and that has radially inward-directed annular ribs (29).

8. The protective device according to Claim 4,
**characterized in that**
the kink protection (25"") is formed as a cylinder (30) that is directed away from the protective body (8"") and that has radially outward-directed annular ribs (31).

## Revendications

1. Dispositif de protection (5, 5', 5", 5"', 5"") pour un collier de serrage (4), par l'intermédiaire duquel une extrémité de tuyau (2) peut être reliée à un raccord de tuyau (3), ledit dispositif comprenant un corps de protection (8, 8', 8", 8'", 8"") constitué d'une matière plastique, qui, lorsqu'il est à l'état monté, entoure le collier de serrage (4) au niveau de sa périphérie, reçoit ledit collier au moins dans sa partie de serrage grâce à une saillie (32) réalisée en direction radiale et recouvre le collier de serrage (4) sur sa largeur correspondante s'étendant dans la direction longitudinale du raccord de tube (3), sachant que le corps de protection (8, 8', 8", 8"', 8"") comprend au moins deux segments annulaires (9, 10) qui peuvent être reliés l'un à l'autre par un encliquetage (24) au niveau de leurs extrémités libres (12, 13) se trouvant en regard l'une de l'autre et qui sont reliés l'un à l'autre de manière mobile au niveau de leurs extrémités (14, 17) opposées aux extrémités libres (12, 13),
**caractérisé en ce**
**que** les segments annulaires (9, 10) sont articulés de manière flexible par rapport à un troisième segment annulaire (11) adjacent au niveau de leurs extrémités (14, 17) côté articulation, opposées aux extrémités libres (12, 13) et
**que** le troisième segment annulaire (11) adjacent est un segment intermédiaire reliant les deux segments annulaires (9, 10) entre eux.

2. Dispositif de protection selon la revendication 1,
**caractérisé en ce**
**que** le premier segment annulaire (9) présente les premiers éléments d'encliquetage (20, 21) extérieurs à son extrémité libre (12),
**que**, par analogie, le deuxième élément annulaire (10) présente les deuxièmes éléments d'encliquetage (22, 23) correspondants intérieurs à son extrémité libre (13), et que les premiers éléments d'encliquetage (20, 21) et les deuxièmes éléments d'encliquetage (22, 23) correspondants forment ensemble
l'encliquetage (24).

3. Dispositif de protection selon la revendication 1 ou 2,
**caractérisé en ce**
**que** l'articulation flexible est réalisée au moyen d'un élément fin flexible (15, 18).

4. Dispositif de protection selon l'une des revendications 1 à 3,
**caractérisé en ce**
**que** le corps de protection (8', 8", 8"', 8"") comporte au moins sur son côté opposé au raccord de tuyau (3) une protection contre les pliures (25, 25", 25"', 25"") réalisée sous la forme d'un surserrage pour recevoir une partie du
tuyau (6).

5. Dispositif de protection selon la revendication 4,
**caractérisé en ce**
**que** la protection contre les pliures (25) est réalisée sous la forme d'un cône (26) effilé orienté dans le sens opposé au corps de protection (8').

6. Dispositif de protection selon la revendication 4,
**caractérisé en ce**
**que** la protection contre les pliures (25") est réalisée sous la forme d'une spirale (27) orientée dans le sens opposé au corps de protection (8").

7. Dispositif de protection selon la revendication 4,
**caractérisé en ce**
**que** la protection contre les pliures (25"') est réalisée sous la forme d'un cylindre (28) orienté dans le sens opposé au corps de protection (8"') et comportant des nervures (29) annulaires orientées radialement vers l'intérieur.

8. Dispositif de protection selon la revendication 4,
**caractérisé en ce**
**que** la protection contre les pliures (25"") est réalisée sous la forme d'un cylindre (30) orienté dans le sens opposé au corps de protection (8"") et comportant des nervures (31) annulaires orientées radialement vers l'extérieur.
